# EUROPEAN PATENT APPLICATION

(11) **EP 4 465 404 A1**
(43) Date of publication of application: **20.11.2024**
(21) Application number: 23740517.0
(22) Date of filing: 13.01.2023
(51) Int. Cl.: H01M 10/058, H01M 10/0583, H01M 10/0565, H01M 10/04, H01M 50/449, H01M 4/38, H01M 4/02, H01M 4/583, H01M 10/052, H01M 10/0568

(54) **SECONDARY BATTERY**

(30) Priority: 14.01.2022 KR 20220005909
(71) Applicant: LG Energy Solution, Ltd., Seoul 07335 (KR)
(72) Inventor: RYU, Ji Hoon, Daejeon 34122 (KR); KIM, Je Young, Daejeon 34122 (KR); KIM, Dong Kyu, Daejeon 34122 (KR); YOON, Yeo Min, Daejeon 34122 (KR); LIM, Tae Seob, Daejeon 34122 (KR)
(74) Representative: Goddar, Heinz J.
(86) International application number: PCT/KR2023/000694
(87) International publication number: WO 2023/136674

(57) **Abstract**

The present disclosure relates to a secondary battery that includes an electrode assembly including an electrode and a separator which are alternately stacked, a gel polymer electrolyte, and a battery case accommodating the electrode assembly and the gel polymer electrolyte, wherein the separator includes a porous substrate and a ceramic coating layer disposed on both sides of the porous substrate, the ceramic coating layer includes inorganic particles in an amount of 92 wt% or greater and less than 100 wt% and a binder in an amount of greater than 0 wt% and 8 wt% or less, the electrode includes a positive electrode and a negative electrode, and the negative electrode includes a silicon-based active material.

## Description

### TECHNICAL FIELD

### Cross-reference to Related Applications

This application claims the benefit of Korean Patent Application No. 10-2022-0005909, filed on January 14, 2022, in the Korean Intellectual Property Office, the disclosure of which is incorporated herein in its entirety by reference.

### Technical Field

The present disclosure relates to a secondary battery.

### BACKGROUND

Recently, with advancements in technology and a rising demand for electronic devices, there has been a sharp increase in demand for secondary batteries as sources of energy, and among these secondary batteries, lithium secondary batteries having high energy density and high voltage have been commercialized and widely used.

The secondary batteries may be manufactured, for example, by accommodating an electrode assembly in which electrodes and a separator are alternately stacked in a battery case, injecting an electrolyte into the battery case, and sealing the battery case.

The electrode may include a positive electrode and a negative electrode. In addition, with respect to the positive electrode and the negative electrode, an active material layer including a positive electrode active material or a negative electrode active material may be formed on a collector. In the positive electrode, a lithium-containing metal oxide such as LiCoO₂ or LiMn₂O₄ is generally used as a positive electrode active material, and accordingly, in the negative electrode, a carbon-based active material and a silicon-based active material that do not contain lithium are used as a negative electrode active material.

In this case, among the negative electrode active materials, the silicon-based active material has attracted great attention in that the capacity thereof is about 10 times higher than that of the carbon-based active material and provides a benefit in which high energy density is obtained even with a thin electrode. However, the silicon-based active material may undergo volume expansion caused by charging/discharging, which may result in cracks/damages of active material particles, leading to degradation in lifespan characteristics, and thus have not been widely used.

Meanwhile, as the separator, generally, a separator in which a ceramic coating layer including inorganic particles and a binder on both sides of a porous substrate is formed is used. In this case, the binder is typically included in a large amount for easy adhesion between the electrode and the separator, and this excessive use of the binder causes an increase in resistance and an increase in thickness of the separator, leading to degradation in energy density of a battery.

In this regard, when the binder in the ceramic coating layer included in the separator is added less to prevent the downside described above, there is a risk of quality degradation, such as a reduction in rigidity of a cell and misalignment of the electrode due to reduced adhesive strength between the electrode and the separator.

In terms of active use of the silicon-based active material, overcoming the above-described downside of the separator is an important task. When the binder of the separator is added more to improve the adhesion between the electrode and the separator, a desired energy density is hardly achieved, and degradation of lifespan characteristics due to an increase in resistance is accelerated. On the other hand, when the binder of the separator is added less, the adhesive strength between the electrode and the separator may decline, which makes it difficult to suppress the volume expansion of the silicon-based active material.

In this respect, in a secondary battery using the silicon-based active material as a negative electrode active material, there remains a need for developing a secondary battery exhibiting improvements in both resistance reduction and cell rigidity, as well as achieving high energy density and volume expansion control of the silicon-based active material.

### SUMMARY

### TECHNICAL PROBLEM

An aspect of the present disclosure provides a secondary battery having improved lifespan performance resulting from an excellent volume expansion control effect of a silicon-based active material, as well as achieving reduced resistance of a secondary battery, and increased cell rigidity and mechanical durability together.

### TECHNICAL SOLUTION

According to an aspect of the present disclosure, there is provided a secondary battery that includes: an electrode assembly including an electrode and a separator which are alternately stacked; a gel polymer electrolyte; and a battery case accommodating the electrode assembly and the gel polymer electrolyte, wherein the separator includes a porous substrate and a ceramic coating layer disposed on both sides of the porous substrate, wherein the ceramic coating layer includes inorganic particles in an amount of 92 wt% or greater and less than 100 wt% and a binder in an amount of greater than 0 wt% and 8 wt% or less, wherein the electrode includes a positive electrode and a negative electrode, and wherein the negative electrode includes a silicon-based active material.

### ADVANTAGEOUS EFFECTS

A secondary battery according to the present disclosure includes an electrode assembly in which electrodes and a separator are alternately stacked and a gel polymer electrolyte, the electrode includes a negative electrode including a silicon-based active material, and a ceramic coating layer included in the separator includes inorganic particles and a binder in a specific amount. The ceramic coating layer included in the separator includes the binder in a small amount, and accordingly, an increase in resistance due to an excess of the binder may be prevented, and the gel polymer electrolyte may compensate for a decrease in cell rigidity of the secondary battery resulting from the decrease in resistance. In particular, as the gel polymer electrolyte has greater rigidity than a liquid electrolyte, the volume expansion of the silicon-based active material may be suppressed to a desirable level. Therefore, the secondary battery according to the present disclosure may exhibit improved lifespan performance resulting from the excellent volume expansion control effect of the silicon-based active material, and also achieve reduced resistance of the secondary battery, and increased cell rigidity and mechanical durability together.

### BRIEF DESCRIPTION OF THE DRAWINGS

FIG. 1 is a schematic side view of a secondary battery according to an embodiment of the present disclosure;
FIG. 2 is a schematic side view of a separator included in a secondary battery according to an embodiment of the present disclosure;
FIG. 3 is a schematic side view of an electrode assembly included in a secondary battery according to another embodiment of the present disclosure;
FIG. 4 is a plan view of a separator or an electrode for describing an application trace of an adhesive, which is present in a secondary battery according to another embodiment of the present disclosure;
FIG. 5 is an image of a surface of a separator included in a secondary battery of Example 1; and
FIG. 6 is an image of a surface of a separator included in a secondary battery of Comparative Example 1.

### DETAILED DESCRIPTION

It will be understood that words or terms used in the specification and claims of the present disclosure shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "average particle diameter (D₅₀)" as used herein may be defined as a particle diameter at a cumulative volume of 50% in a particle size distribution curve of particles. The average particle diameter (D₅₀), for example, may be measured by using a laser diffraction method. The laser diffraction method generally allows the measurement of a particle diameter ranging from a submicron level to a few mm and may produce highly repeatable and high-resolution results.

A secondary battery of the present disclosure will be described in detail with reference to the drawings below. In allocating reference numerals to components of each drawing, the same components may have the same reference numeral even though the same components are displayed on different drawings. In addition, in describing the present disclosure, detailed descriptions of related known components and functions will be omitted when it is determined that the detailed descriptions may obscure the gist of the present disclosure.

**<Secondary battery>**

The present disclosure relates to a secondary battery, and particularly, to a lithium secondary battery.

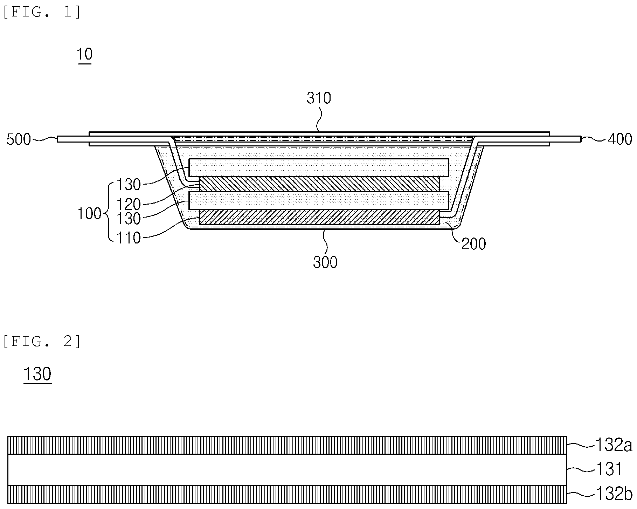

Hereinafter, a secondary battery according to an embodiment of the present disclosure will be described with reference to FIGS. 1 and 2. Specifically, FIG. 1 is a schematic side view for describing a secondary battery according to an embodiment of the present disclosure, and FIG. 2 is a schematic side view for describing a structure of a separator included in a secondary battery according to an embodiment of the present disclosure.

Referring to FIG. 1 and 2, a secondary battery 10 according to an embodiment of the present disclosure includes an electrode assembly 100 including electrodes 110 and 120 and a separator 130 which are alternately stacked, a gel polymer electrolyte 200, and a battery case 300 accommodating the electrode assembly 100 and the gel polymer electrolyte 200, the separator 130 includes a porous substrate 131 and ceramic coating layers 132a and 132b disposed on both sides of the porous substrate 131, the ceramic coating layer 132a and 132b include inorganic particles in an amount of 92 wt% or greater and less than 100 wt%, and a binder in an amount of greater than 0 wt% and 8 wt% or less, the electrodes 110 and 120 include a positive electrode 110 and a negative electrode 120, and the negative electrode 120 includes a silicon-based active material.

### Electrode assembly 100

The electrode assembly 100 includes electrodes 110 and 120 and a separator 130. In this case, the electrodes 110 and 120 and the separator 130 may be alternately stacked. The electrodes 110 and 120 and the separator 130 may each be one or more, and may specifically be plural.

The electrodes 110 and 120 may include a positive electrode 110 and a negative electrode 120. As shown in FIG. 1, the positive electrode 110 and the negative electrode 120 may be alternately stacked with the separator 130 therebetween.

The electrode assembly 100 may be a stack type electrode assembly having one or more, specifically, two or more basic units, in which the positive electrode 110, the separator 130, the negative electrode 120, and the separator 130 are sequentially stacked, stacked therein. In addition, the electrode assembly may be a zigzag stack type electrode assembly having one or more, specifically, two or more basic units, in which the separator is bent or folded in a zigzag shape and the positive electrode, the separator, the negative electrode, and the separator are sequentially stacked, stacked therein.

The positive electrode 110 may include a positive electrode current collector, and a positive electrode active material layer disposed on at least one surface of the positive electrode current collector.

The positive electrode current collector is not particularly limited as long as it has conductivity without causing chemical changes in batteries. To be specific, the positive electrode current collector may include at least one selected from the group consisting of copper, stainless steel, aluminum, nickel, titanium, fired carbon, and an aluminum-cadmium alloy, and may specifically include aluminum.

The positive electrode current collector may be used in various forms such as a film, a sheet, a foil, a net, a mesh, a porous body, a foam body, and a non-woven fabric body. In addition, the positive electrode current collector may include a polymer layer and a metal layer disposed on both sides of the polymer layer, and the metal layer may include at least one type selected from the group consisting of copper, stainless steel, aluminum, nickel, titanium, fired carbon, and an aluminum-cadmium alloy.

The positive electrode current collector may generally have a thickness of 3 um to 500 µm.

The positive electrode active material layer may be disposed on the positive electrode current collector, and may specifically be disposed on one surface or both surfaces of the positive electrode current collector.

The positive electrode active material layer may include a positive electrode active material.

The positive electrode active material is a compound capable of reversible intercalation and deintercalation of lithium, and specifically, may include a lithium transition metal composite oxide including at least one transition metal composed of nickel, cobalt, manganese, and aluminum, and lithium, preferably a lithium transition metal composite oxide including a transition metal containing nickel, cobalt, and manganese, and lithium.

More specifically, the lithium transition metal composite oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are each an atomic fraction of independent elements, wherein 0<p2<1, 0<q2<1, 0<r3<1, 0<S2<1, and p2+q2+r3+S2=1), etc.), and any one thereof or a compound of two or more thereof may be included. Among these, in terms of being able to increase the capacity and stability of a battery, the lithium transition metal composite oxide may be LiCoO₂, LiMnO₂, LiNiO₂, a lithium nickel-manganese-cobalt oxide (e.g., Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15}) O₂, or Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.), and the like.

The positive electrode active material may have an average particle diameter (D₅₀) of 2 um to 30 um, specifically 5 um to 10 um, and within the above range, a high positive electrode energy density is achievable, and it is preferable in terms of preventing cracks or breakage of the positive electrode active material.

The positive electrode active material layer may include the positive electrode active material in an amount of 80 wt% to 99 wt%, preferably 92 wt% to 98 wt% weight, in consideration of exhibiting sufficient capacity of the positive electrode active material.

The positive electrode active material layer may further include a positive electrode binder and a positive electrode conductive material, along with the positive electrode active material.

The positive electrode binder is a component that supports binding of an active material and a conductive material, and binding to a collector, and may specifically include at least one type selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, and fluorine rubber, and may preferably be polyvinylidene fluoride.

The positive electrode binder may be included in an amount of 0.1 wt% to 10 wt%, preferably 0.1 wt% to 3 wt%, and more specifically 0.5 wt% to 2.5 wt% in a positive electrode active material layer to sufficiently secure binding force between components such as positive electrode active materials.

The positive electrode conductive material may be used to support and improve the conductivity of a secondary battery, and is not particularly limited as long as it has conductivity without causing chemical changes in batteries. Specifically, the conductive material may include at least one type selected from the group consisting of: graphite such as natural graphite or artificial graphite; carbon black such as acetylene black, Ketjen black, channel black, furnace black, lamp black, and thermal black; conductive fibers such as carbon fibers or metal fibers; carbon nanotubes such as single-walled carbon nanotubes and multi-walled carbon nanotubes; fluorocarbon; metal powder such as aluminum powder and nickel powder; conductive whisker such as zinc oxide and potassium titanate; conductive metal oxide such as titanium oxide; and polyphenylene derivatives.

The positive electrode conductive material may be included in an amount of 0.1 wt% to 10 wt%, preferably 0.1 wt% to 3.0 wt%, and more specifically 0.5 wt% to 2.5 wt% in a positive electrode active material layer to sufficiently secure electrical conductivity.

The positive electrode active material may have a thickness of 30 um to 400 um, preferably 50 um to 200 µm.

The positive electrode active material layer may have a loading amount of 1 mAh/cm² to 7 mAh/cm², specifically 2 mAh/cm² to 6 mAh/cm².

A positive electrode slurry including a positive electrode active material and optionally a binder, a conductive material, and a solvent for forming a positive electrode slurry may be applied onto the positive electrode current collector, and then dried and roll pressed to prepare the positive electrode.

The solvent for forming a positive electrode slurry may include an organic solvent such as N-methyl-2-pyrrolidone (NMP), and may be used in an amount such that desirable viscosity is obtained when the positive electrode active material, and optionally the binder and the conductive material are included. For example, the positive electrode slurry may include the solvent for forming a positive electrode slurry such that the concentration of the solid content, which includes the positive electrode active material, and optionally included the binder and the conductive material, reaches 50 wt% to 95 wt%, preferably 70 wt% to 90 wt%.

The negative electrode 120 includes a silicon-based active material.

The silicon-based active material exhibits high capacity and high energy density as benefits, but has a large extent of volume expansion from intercalation/deintercalation of lithium. When the silicon-based active material expands in volume from charging/discharging, a new negative electrode interface is formed, thereby consuming electrolyte additives, and the like and forming a new solid electrolyte interface layer (SEI layer, surface electrolyte interface layer), and this causes significant degradation in life performance due to the consumption of electrolyte additives, damage to the silicon-based active material, and the like.

To make sure that the limitations described above are prevented, in the secondary battery of the present disclosure, a combination of a separator including a ceramic coating layer, and a gel polymer electrolyte, which will be described later, is used. The gel polymer electrolyte may improve cell rigidity of a secondary battery, and may thus suppress volume expansion of a silicon-based active material to an excellent level. In addition, the separator including the ceramic coating layer may reduce the amount of binder and thickness, and accordingly, resistance may be reduced, and an energy density improvement effect according to the use of a silicon-based active material may be expressed to an excellent level. Therefore, the secondary battery of the present disclosure has an excellent lifespan performance improvement effect of a silicon-based active material, reduced resistance, excellent mechanical durability, and improved cell rigidity.

The silicon-based active material may include a compound represented by Formula 1 below.

[Formula 1] SiOₓ(0≤x<2)

In Formula 1, as SiO₂ (where x = 2) does not react with lithium ions and thus is not able to store lithium, x is preferably within the above range. Specifically, the silicon-based compound may include at least one of the compounds represented by Formula of Si and SiOₓ (0.5≤x≤1.5).

The silicon-based active material may further include a carbon coating layer disposed on a surface thereof. The carbon coating layer may serve as a protection layer that suppresses volume expansion of the silicon-based active material and prevents a side reaction with an electrolyte.

The silicon-based active material may include the carbon coating layer in an amount of 0.1 wt% to 10 wt%, preferably 3 wt% to 7 wt%, and when the carbon coating layer is within the above range, it is preferable in that the volume expansion of the silicon-based active material may be controlled to an excellent level and also a side reaction with an electrolyte may be prevented.

The carbon coating layer may be an amorphous carbon coating layer. Specifically, the carbon coating layer may be formed through chemical vapor deposition (CVD) using at least one type of hydrocarbon gas selected from the group consisting of methane, ethane, and acetylene.

The average particle diameter (D₅₀) of the silicon-based active material may be 1 um to 30 µm, more preferably 2 um to 15 µ, in terms of ensuring the structural stability of the active material upon charging and discharging, preventing an increase in the extent of volume expansion/contraction with an excessively large particle size, and preventing reduction in initial efficiency due to excessively low particle size.

The negative electrode 120 may further include a carbon-based active material along with a silicon-based active material.

The carbon-based active material may include at least one type selected from the group consisting of artificial graphite, natural graphite, hard carbon, soft carbon, carbon black, graphene, and fibrous carbon, and may specifically include at least one type selected from the group consisting of artificial graphite and natural graphite.

The carbon-based active material may have an average particle diameter (D₅₀) of be 5 um to 35 um, preferably 10 um to 25 µm, in terms of ensuring structural stability upon charging and discharging and reducing side reactions with an electrolyte.

When the negative electrode 120 includes the silicon-based active material and the carbon-based active material, a weight ratio of the silicon-based active material and the carbon-based active material may be 1:99 to 15:85, specifically 7:93 to 12:88. Within the above range, a reduced effect on the volume expansion of the silicon-based active material, sufficient capacity of the negative electrode, and a high-loading negative electrode are achievable.

The negative electrode 120 may include a negative electrode current collector and a negative electrode active material layer disposed on at least one surface of the negative electrode current collector. In this case, the silicon-based active material and/or the carbon-based active material may be included in the negative electrode active material layer.

The negative electrode current collector is not particularly limited as long as it has conductivity without causing chemical changes in batteries. To be specific, the negative electrode current collector may include at least one selected from the group consisting of copper, stainless steel, aluminum, nickel, titanium, fired carbon, and an aluminum-cadmium alloy, and may specifically include copper.

The negative electrode current collector may be used in various forms such as a film, a sheet, a foil, a net, a mesh, a porous body, a foam body, and a non-woven fabric body. In addition, the negative electrode current collector may include a polymer layer and a metal layer disposed on both sides of the polymer layer, and the metal layer may include at least one type selected from the group consisting of copper, stainless steel, aluminum, nickel, titanium, fired carbon, and an aluminum-cadmium alloy.

The negative electrode current collector may generally have a thickness of 3 um to 500 µm.

The negative electrode active material layer may be disposed on at least one surface of the negative electrode current collector, and may more specifically be disposed on one surface or both surfaces of the negative electrode current collector.

When the negative electrode includes the silicon-based active material and the carbon-based active material, the negative electrode active material layer may include the silicon-based active material and the carbon-based active material in an amount of 0 wt% to 99 wt%, specifically 94 wt% to 98 wt%. In this case, a weight ratio of the silicon-based active material and the carbon-based active material may be 1:99 to 15:85, specifically 7:93 to 12:88.

The negative electrode active material layer may further include a negative electrode binder, a negative electrode conductive material, and/or a thickener.

The negative electrode binder may be included in the negative electrode active material layer for binding of a negative electrode current collector and a negative electrode active material layer, and binding of a negative electrode active material.

The negative electrode binder may include at least one type selected from the group consisting of polyvinylidene fluoride (PVdF), styrene butadiene rubber (SBR), acrylonitrile butadiene rubber, acryl-based rubber, butyl rubber, fluoro rubber, polyvinyl alcohol, carboxymethyl cellulose (CMC), starch, hydroxypropyl cellulose, regenerated cellulose, polyvinyl alcohol (PVA), polyacryl-based acid (PAA), polyethylene glycol (PEG), polyacrylonitrile (PAN), and polyacrylamide (PAM), and may specifically include styrene butadiene rubber (SBR).

The negative electrode active material layer may include the negative electrode binder in an amount of 0.5 wt% to 10 wt%. When in the above range, it is preferable in terms of preventing a sharp increase in resistance due to excessive addition of a first binder as well as exhibiting sufficient adhesive strength.

The negative electrode conductive material may be used to improve conductivity of the negative electrode active material layer, and may preferably have conductivity without causing chemical changes. Specifically, the negative electrode conductive material may be at least one type selected from the group consisting of natural graphite, artificial graphite, carbon black, acetylene black, Ketjen black, channel black, furnace black, lamp black, thermal black, conductive fiber, single-wall carbon nanotube (SWCNT), multi-wall carbon nanotube (MWCNT), fluorocarbon, aluminum powder, nickel powder, zinc oxide, potassium titanate, titanium oxide, and polyphenylene derivatives, and may preferably include carbon black.

The negative electrode active material layer may include the negative electrode conductive material in an amount of 0.5 wt% to 10 wt%.

The negative electrode active material layer may further include a thickener. The thickener may include carboxymethylcellulose (CMC). The first negative electrode active material layer may include the thickener in an amount of 0.5 wt% to 5 wt%, but the present disclosure is not limited thereto.

The negative electrode active material may have a thickness of 10 um to 100 um, preferably 15 um to 45 µm.

The negative active material layer 210 may have a loading amount of 1 mAh/cm² to 9 mAh/cm², specifically 2 mAh/cm² to 6 mAh/cm².

As shown in FIG. 2, the separator 130 includes the porous substrate 131 and the ceramic coating layers 132a and 132b disposed on both sides of the porous substrate.

The porous substrate 131 is not particularly limited as long as it is commonly used as a separator of a secondary battery. Specifically, the porous substrate 131 preferably has low resistance to the movement of electrolyte ions and excellent moisture-retention of an electrolyte. More specifically, the porous substrate 131 may include at least one type selected from the group consisting of a polyolefin-based resin such as polyethylene, polypropylene, polybutylene, and polypentene, a fluorine-based resin such as polyvinylidene fluoride and polytetrafluoroethylene, a polyester-based resin such as polyethylene terephthalate and polybutylene terephthalate, a polyacrylonitrile resin, and a cellulose-based resin, and may also be a porous film or nonwoven fabric including any one thereof or a copolymer or mixture of two or more thereof, or a stack structure of two or more layers thereof. The porous substrate 131 may be a porous film or nonwoven fabric including the polyolefin-based resin, or a stack structure of two or more layers thereof.

The size and porosity of pores present in the porous substrate 131 are not particularly limited. Specifically, the porous substrate 131 may be a porous substrate including pores having an average pore diameter of 0.01 um to 1 um, specifically 20 nm to 60 nm, and a porosity of 10 vol% to 90 vol%, specifically 30 vol% to 60 vol%, and in this case, it is preferable in that the porous substrate 131 may have improved mechanical strength and also facilitate the movement of ionic materials between the positive electrode and the negative electrode. The average pore diameter and porosity may be measured through analysis using a focused ion beam (FIB), gas adsorption, or mercury intrusion porosimetry.

The ceramic coating layers 132a and 132b are disposed on both sides of the porous substrate 131.

The ceramic coating layers 132a and 132b include inorganic particles and a binder. More specifically, the ceramic coating layer may be formed of only the inorganic particles and the binder.

The inorganic particles may be introduced in order to prevent short circuit between a positive electrode and a negative electrode resulting from thermal shrinkage of the porous substrate at a high temperature, and the inorganic particles may serve as a form of spacer capable of maintaining the physical shape of the porous substrate and minimizing thermal shrinkage.

The inorganic particles may be used without particular limitation as long as they are electrochemically stable in the operating voltage range of a battery (e.g., 0 V to 5 V with respect to Li/Li+) and do not cause oxidation and/or reduction reactions, that is, electrochemical reactions. The inorganic particles may be lithium phosphate (Li₃PO₄); lithium titanium phosphate (LiₓTi_{y}(PO₄)₃, 0<x<2, 0<y<3); (LiAlTiP)ₓO_{y}-based glass such as 14Li₂O-9Al₂O₃-38TiO₂-39P₂O₅ (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitrides (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, Al₂O₃, AlOOH, BaTiO₃, BaSO₄, MgO, CaO, CeO₂, NiO, SiO₂, SnO₂, SrTiO₃, TiO₂, Y₂O₃, ZnO, ZrO₂, Pb(Zr,Ti)O₃(PZT), Pb₁₋ₓLaₓZr_{1-y}TiyO₃(PLZT), PB(Mg₃Nb_{2/3})O₃-PbTiO₃ (PMN-PT), hafnia (HfO₂), a mixture of two or more thereof, and the like. Specifically, the inorganic particles may be Al₂O₃, AlOOH, BaTiO₃, BaSO₄, MgO, CaO, CeO₂, NiO, SiO₂, SnO₂, SrTiO₃, TiO₂, Y₂O₃, ZnO, ZrO₂, Pb(Zr,Ti)O₃(PZT), Pb₁₋ₓLaₓZr_{1-y}TiyO₃(PLZT), PB(Mg₃Nb_{2/3})O₃-PbTiO₃ (PMN-PT), hafnia (HfO₂), and a mixture of two or more thereof, and may more specifically include at least one selected from the group consisting of Al₂O₃, AlOOH, BaTiO₃, BaSO₄, and MgO.

The inorganic particles may have an average particle diameter (D₅₀) of 0.1 um to 1 um, specifically 0.2 um to 0.7 µm.

The ceramic coating layers 132a and 132b include the inorganic particles in an amount of 92 wt% or greater and less than 100 wt%. The amount of the inorganic particles needs to be considered in relation to an amount of the binder, which will be described later, and may be modulated in terms of preventing degradation in thermal stability due to thermal contraction of the porous substrate and preventing an increase in resistance due to an excess of the binder. Specifically, the ceramic coating layers may include the inorganic particles in an amount of 93 wt% to 98 wt%.

The binder may be included in the ceramic coating layers 132a and 132b for binding of inorganic particles and binding of the separator and the electrode.

In this case, the ceramic coating layers include the binder in an amount of greater than 0 wt% and less than 8 wt%. When the binder is included in an amount of greater than 8 wt%, the binder may be excessively included in the ceramic coating layers, resulting in an increase in resistance of a secondary battery. Meanwhile, as the binder is included in the above range, there is a risk of reduction in cell rigidity of a secondary battery due to reduced adhesive strength between the electrode and the separator, but as will be described later, the present disclosure uses a combination of a separator having the characteristics described above and a gel polymer electrolyte, and may thus achieve improved cell rigidity and mechanical durability as well as improved resistance of a secondary battery.

Specifically, the binder may be included in an amount of 2 wt% to 7 wt% in the ceramic coating layers, and within the above range, an increase in the 1resistance of a secondary battery may be prevented and also the binding strength of inorganic particles may be obtained to the maximum.

The binder may be a hydrophobic binder including at least one hydrophobic functional group such as a fluorine group (-F), an acrylate group (CH₂=CHCOO-), a methacrylate group (CH₂=C(CH₃)COO-), a vinyl acetate group (-CH₂=CHOCO-), or a nitrile group (-C=N) in molecules, or a hydrophilic binder including at least one polar group such as a hydroxyl group (-OH), a carboxyl group (-COOH), a maleic anhydride group (-COOOC-), a sulfonic acid group (-SO₃H), or an isocyanate group (-NCO-), and any one thereof or a mixture of two or more thereof may be used. More specifically, the hydrophobic binder may be polyvinylidene fluoride, polyvinylidene fluoride-co-hexafluoropropylene, polyvinylidene fluoride-co-trichloroethylene, polymethylmethacrylate, polyacrylonitrile, polyvinylacetate, ethylene-co-vinylacetate, polyimide, polyethylene oxide, and the like. In addition, the hydrophilic binder may be cyanoethylpullulan, cyanoethylpolyvinylalcohol, cyanoethylcellulose, cyanoethylsucrose, carboxyl methyl cellulose, polyvinylalcohol, polyacrylic acid, polymaleic anhydride, polyvinylpyrrolidone, or the like.

Specifically, the binder may be an acryl-based binder. The acryl-based binder may be well dispersed with the inorganic particles when the ceramic coating layer is manufactured, and accordingly, the ceramic coating layer may be prevented from being layer-separated into a binder in an upper layer and inorganic particles in a lower layer. The layer-separation consequently hinders ion movement in a negative electrode and a positive electrode and causes an increase in resistance, and when an acryl-based binder is used as the binder, a resistance reduction effect targeted by the present disclosure may be obtained to a more excellent level.

The acryl-based binder may include at least one type selected from the group consisting of a copolymer of ethylhexyl acrylate and methyl methacrylate, polymethylmethacrylate, polyethylhexylacrylate, polybutylacrylate, polyacrylonitrile, and a copolymer of butylacrylate and methylmethacrylate.

The ceramic coating layer may include the inorganic particles and the binder in a weight ratio of 92:8 or greater and less than 100:0, specifically, 93:7 to 98:2.

The ceramic coating layers 132a and 132b may have a thickness of 0.1 um to 10 um, specifically 0.5 um to 5 µm, more specifically 1.0 µm to 2.5 um. The ceramic coating layers 132a and 132b include the binder in the small amount described above, and thus a thin separator may be obtained to further improve the energy density of a secondary battery and achieve low resistance. The thickness of the ceramic coating layers may indicate a thickness of one ceramic coating layer formed on one surface of the porous substrate.

A composition for forming a ceramic coating layer in which inorganic particles and a binder are dispersed in a solvent may be applied onto the porous substrate and dried to manufacture the ceramic coating layers 132a and 132b. A method of applying the composition for forming a ceramic coating layer is not particularly limited, and dip coating, die coating, roll coating, comma coating, gravure coating, and the like may be used, and specifically, gravure coating may be used. As a method of drying after applying the composition for forming a ceramic coating layer, natural drying, reversible drying, or hot air drying may be used.

The separator 130 may have a thickness of 1 um to 20 um, specifically 5 um to 14 µm, and according to the present disclosure, the amount of the binder in the ceramic coating layers is reduced, and thus a thin separator may be obtained to further improve the energy density of a battery and achieve low resistance.

As shown in FIG. 1, the secondary battery may further include a plurality of electrode tabs 400 and 500 connected to the electrode assembly. Specifically, the plurality of electrode tabs 400 and 500 may each be connected to the positive electrode 110 and the negative electrode 120 of the electrode assembly 100, and protrude to the outside of the battery case 300 to provide a path through which electrons may move. In addition, in FIG. 1, two electrode tabs 400 and 500 are shown to be disposed in different directions with respect to the electrode assembly 100, but are not limited thereto, and may protrude side by side in the same direction from one side of the electrode assembly 100. The plurality of electrode tabs 400 and 500 may be a positive electrode tab and a negative electrode tab, and may each be connected to a positive electrode and a negative electrode.

### Gel polymer electrolyte 200

The gel polymer electrolyte 200 is injected or accommodated in a battery case 300, which will be described later. The gel polymer electrolyte 200 may be impregnated and cured into the electrode assembly 100 and disposed inside and outside the electrode assembly.

The gel polymer electrolyte 200 does not flow and is used as a gelated electrolyte, and may thus improve the cell rigidity of a secondary battery. In particular, according to the secondary battery of the present disclosure, cell rigidity may be improved through the gel polymer electrolyte, and accordingly, a volume expansion control effect of the silicon-based active material may be excellent to improve life performance. In addition, in the present disclosure, the gel polymer electrolyte is used along with the separator described above, and thus a secondary battery having reduced resistance and improved cell rigidity is obtainable. Meanwhile, when the separator described above and a liquid electrolyte are used, cell rigidity is excessively degraded, and thus there is a risk of processability degradation and product defects due to cell sagging and separator slippage, and there is a chance of explosion of a secondary battery due to reduced safety.

The gel polymer electrolyte 200 may be a cured product of a gel polymer electrolyte composition including a lithium salt, a polymerization initiator, and an oligomer compound. When the gel polymer electrolyte composition is cured, the oligomer compound may be crosslinked and cured to form an electrolyte (gel polymer electrolyte) hardened in the form of a gel. Specifically, the gel polymer electrolyte 200 may include a cured product of the oligomer compound and a lithium salt.

The lithium salt may be used to provide lithium ions to a secondary battery.

Any compound may be used as the lithium salt without particular limitation as long as it may provide lithium ions used in a secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 5.0 M, preferably 0.1 M to 3.0 M. When the concentration of the lithium salt is in the above range, the electrolyte has suitable conductivity and viscosity, thereby exhibiting excellent performance, and lithium ions may effectively move.

The polymerization initiator is for polymerizing an oligomer compound to form a polymer network bonded in a three-dimensional structure.

A photopolymerization initiator or a thermal polymerization initiator may be used as the polymerization initiator according to the way of polymerization.

Specifically, typical examples of the photopolymerization initiator may include at least one compound selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenyl-acetoxy-ethoxy]-ethyl ester, oxy-phenyl-acetic 2-[2-hydroxyethoxy]-ethyl ester, alpha-dimethoxy-alpha-phenyl acetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadien-1-yl) bis[2,6-difluoro-3-(1H-pyrrol-1-yl)phenyl]titanium, 4-isobutylphenyl-4'-methylphenyl iodonium, hexafluorophosphate, and methyl benzoylformate.

In addition, typical examples of the thermal polymerization initiator may include at least one compound selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The polymerization initiator may be decomposed in a battery by heat at a temperature of 30 °C to 100 °C or by light such as UV light at room temperature (5 °C to 30 °C) to form radicals, and may form cross-linking by free radical polymerization, thereby allowing oligomers to be polymerized.

Meanwhile, with respect to 100 parts by weight of an oligomer compound, the polymerization initiator may be used in an amount of 0.001 parts by weight to 10 parts by weight, preferably, 0.0015 parts by weight to 1 part by weight, more preferably 0.002 parts by weight to 0.7 parts by weight. When the polymerization initiator is used in the amount within the range, an amount of an unreacted polymerization initiator which may adversely affect battery performance may be minimized. In addition, when the polymerization is used within the above range, gelation of an electrolyte composition may be appropriately performed.

The oligomer compound may include at least one type selected from the group consisting of a polyether-based oligomer, a polycarbonate-based oligomer, an acrylate-based oligomer, a polysiloxane-based oligomer, a phosphazene-based oligomer, a polyethylene-based oligomer, a urethane-based oligomer, an epoxy-based oligomer, a fluorine-based oligomer, polyethylene oxide, polyester sulfide, polyvinyl alcohol, and polyvinylidene fluoride, and may specifically include at least one selected from the group consisting of at least one type selected from a fluorine-based oligomer, a polycarbonate-based oligomer, and a polysiloxane-based oligomer.

For example, the fluorine-based oligomer may specifically include a unit derived from a fluorine-based monomer. The fluorine-based oligomer may further improve battery stability as a fluorine-based functional group included therein suppresses the generation of oxygen radicals caused by the decomposition of a positive electrode active material, and has excellent flame retardancy. More specifically, the fluorine-based oligomer may include at least one type selected from tetrafluoroethylene (TFE)-vinyl acetate copolymer, (allyl 1,1,2,2-tetrafluoroethyl ether)-(2,2,2-trifluoro ethyl acrylate) copolymer, tetrafluoroethylene-(2-vinyl-1,3-dioxolane) copolymer, and tetrafluoroethylene-vinyl methacrylate copolymer.

In addition, the polycarbonate-based oligomer has affinity with a positive electrode, has a structure similar to that of an organic electrolyte, and has excellent ionic conductivity or ionic dissociation. The polycarbonate-based oligomer may be a polycarbonate having a weight average molecular weight of 1,000 g/mol to 50,000 g/mol, specifically 4,500 g/mol to 30,000 g/mol, more specifically 10,000 g/mol to 25,000 g/mol.

In addition, the polysiloxane-based oligomer may serve as a scavenger of gas (HF and the like) generated by an electrolyte side reaction, and may thus improve storage characteristics at high temperature.

The oligomer compound may have a weight average molecular weight of 1,000 g/mol to 50,000 g/mol, specifically 4,500 g/mol to 30,000 g/mol.

The gel polymer electrolyte composition may include the oligomer compound in an amount of 1 wt% to 20 wt%, specifically 3 wt% to 10 wt%, and within the above range, the cell rigidity of a secondary battery is greatly improved, and accordingly, the ion conductivity of the gel polymer electrolyte and lithium ion mobility may be provided to an excellent level.

The gel polymer electrolyte composition may further include a solvent along with a lithium salt, a polymerization initiator, and an oligomer compound. The solvent may be used to dissolve or disperse a lithium salt, a polymerization initiator, and an oligomer compound.

The solvent is commonly used in a secondary battery, and for example, ether, ester (acetate, propionate), amide, linear carbonate, or cyclic carbonate, nitrile (acetonitrile, SN, and the like) may be used alone or in a combination of two or more.

In particular, typically, a carbonate-based solvent including a carbonate compound that is a cyclic carbonate, a linear carbonate, or a mixture thereof may be used.

Specific examples of the cyclic carbonate compound are a single compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of at least two or more selected therefrom. In addition, specific examples of the linear carbonate compound may typically be a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of at least two or more selected therefrom, but the present disclosure is not limited thereto.

Particularly, among the carbonate-based solvents, a cyclic carbonate such as ethylene carbonate and propylene carbonate, is a highly viscous organic solvent that has high permittivity and dissociates lithium salts in an electrolyte well, and may thus preferably be used, and the cyclic carbonate may be more preferably used since when the cyclic carbonate is mixed with a low-viscosity, low-permittivity constant linear carbonate such as ethylmethyl carbonate, diethyl carbonate, or dimethyl carbonate in an appropriate ratio and used, an electrolyte having high electrical conductivity may be prepared.

In addition, the ester among the above organic solvents may be a single compound selected from the group consisting of methyl acetate, ethyl acetate, propyl acetate, methyl propionate, ethyl propionate, γ-butyrolactone, γ-valerolactone, γ-caprolactone, α-valerolactonem and ε-caprolactone, or a mixture of two or more selected therefrom, but is not limited thereto.

In this case, the gel polymer electrolyte composition may be cured at a temperature of 50 °C to 100 °C for 0.5 to 48 hours, preferably at a temperature of 60 °C to 80 °C for 0.5 to 24 hours.

### Battery case 300

The battery case 300 may be provided to accommodate the electrode assembly 100 and the gel polymer electrolyte 200.

The battery case 300 may be a pouch-type case made of a flexible material, and may be, for example, an aluminum pouch battery case.

When the battery case 300 is an aluminum pouch battery case, the battery case 300 may be formed of, for example, a pouch film stacked in order of a polypropylene layer (PP layer), an aluminum layer, and a polyethylene terephthalate layer (PET layer) from the inside.

The battery case 300 may include a cup portion, which is an accommodation space for accommodating an electrode assembly.

The battery case 300 may include a cover 310, and after accommodating the electrode assembly and curing and gelling the gel polymer electrolyte composition, the battery case 300 may be sealed with the cover to manufacture a sealed secondary battery.

The secondary battery may be manufactured through a method including accommodating an electrode assembly in a battery case, injecting a gel polymer electrolyte composition into the battery case, curing the gel polymer electrolyte composition, and sealing the battery case. After the sealing of the battery case, activation, degassing, and re-sealing processes known in the art may be further performed.

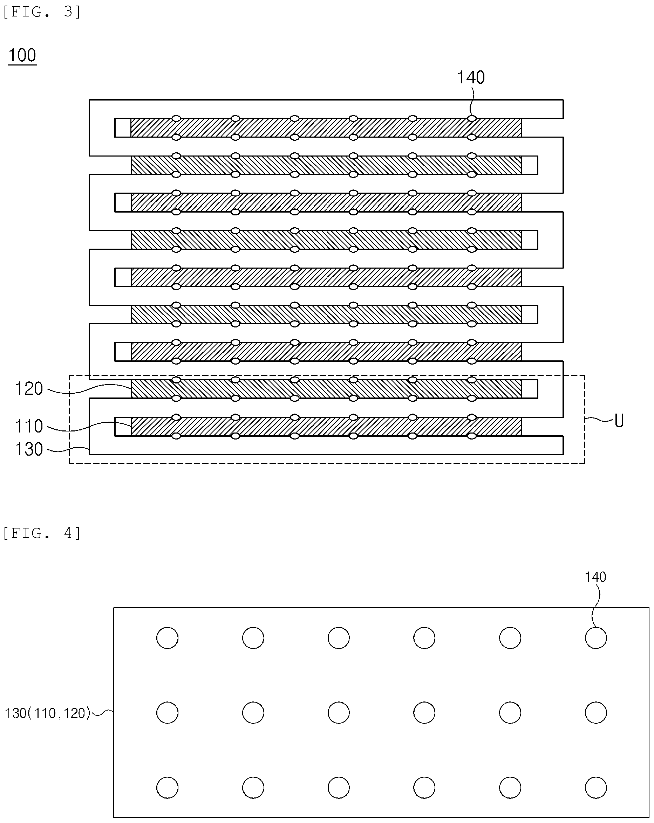

Hereinafter, a secondary battery according to another embodiment of the present disclosure will be described with reference to FIGS. 3 and 4. FIG. 3 is a schematic side view for describing an electrode assembly included in a secondary battery according to another embodiment of the present disclosure. FIG. 4 is a schematic plan view of any one of the electrodes 110 and 120 or the separator 130 included in the secondary battery according to another embodiment of the present disclosure.

Referring to FIG. 3, a secondary battery according to another embodiment of the present disclosure may be the same as the above-described secondary battery, except that an adhesive is applied onto a surface of at least one of the electrodes 110 and 120 and the separator 130, which are then bonded together to prepare the electrode assembly 100, and the gel polymer electrolyte 200 and the electrode assembly 100 are accommodated in the battery case 300 to remove the adhesive, leaving an application trace 140 of the adhesive on a surface of at least one of the electrodes 110 and 120 and the separator 130.

The adhesive may be introduced to bond the electrodes 110 and 120 and the separator 130. Specifically, in the process of stacking, assembling, and stacking the electrodes and the separator in the course of manufacturing the secondary battery, the adhesive may be introduced to fix the aligned positions of the electrodes and the separator. As described above, the separator 130 according to the present disclosure includes a binder in a reduced amount, and accordingly, the adhesive strength between the electrode and the separator may not be sufficient in the manufacture of a secondary battery, and the adhesive makes up for the limitation by easily bonding the electrode and the separator and preventing the separator from slipping in the process of manufacturing an electrode assembly, and thus process efficiency and quality may be improved.

The adhesive is used to manufacture an electrode assembly by bonding the electrode and the separator, and after the electrode assembly is accommodated in the battery case, the adhesive may be removed as the gel polymer electrolyte is accommodated. Specifically, the adhesive may be dissolved and removed by a solvent in the gel polymer electrolyte composition for forming a gel polymer electrolyte. In the secondary battery according to another embodiment of the present disclosure, using the adhesive, electrodes and a separator may be easily bonded without an increase in the binder of the separator, and also an increase in thickness of the separator due to an increase in the binder is prevented, and accordingly, the secondary battery may have further improved energy density.

The adhesive may be applied onto a surface of at least one of the electrode and the separator in the form of a plurality of patterns spaced apart. Specifically, the adhesive may be applied onto a surface of at least one of the electrode and the separator in the form of a plurality of dots spaced apart.

As shown in FIGS. 3 and 4, the adhesive is removed through the accommodation of the gel polymer electrolyte into the battery case or the injection of the gel polymer electrolyte composition into the battery case, leaving an application trace 140 of the adhesive on a surface of at least one of the electrodes 110 and 120 and the separator 130. Specifically, when the gel polymer electrolyte composition is injected into the battery case in which the electrode assembly is accommodated, the adhesive may be dissolved and removed by a solvent in the gel polymer electrolyte composition, leaving an application trace of the adhesive.

The dissolution or removal of the adhesive may be performed more smoothly under pressure in the process of activation and degassing commonly involved in the manufacture of a secondary battery. The activation may be a process in which a solid electrolyte interface layer (SEI layer, surface electrolyte interface layer) is formed on a surface of an electrode plate of the electrode assembly through a charging process in an initial secondary battery and represents charges, and this may be a process for allowing a secondary battery to supply power, and the process may be performed at, for example, 45 °C or higher, specifically 50 °C to 70 °C. The degassing process is a process of discharging gas generated in the activation process or the like to the outside, and in the degassing process, a process of pressurizing the secondary battery with a jig or the like may be accompanied. The adhesive may be more smoothly dissolved or removed through such temperature increase, pressurization, or the like.

The application area of the adhesive may be greater than 0% and 1% or less, specifically 0.0001% to 0.05%, with respect to an area of a surface in which the separator and the electrode are in contact. Within the above range, it is preferable in that the electrode and the separator may be bonded with sufficient adhesive strength and also an issue that an adhesive is excessively applied and remains without being dissolved in a solvent to cause an increase in resistance may be prevented.

The adhesive may be an acrylate-based adhesive. As the acrylate-based adhesive is used, the above-described adhesive may be easily dissolved.

Specifically, the acrylate-based adhesive may include a copolymer including a repeating unit derived from at least one monomer selected from the group consisting of methyl methacrylate (MMA), 2-ethylhexylacrylate (2-EHA), and 2-hydroxyethyl acrylate (2-HEA).

The copolymer may have a weight average molecular weight (Mw) of 120,000 g/mol to 140,000 g/mol. The molecular weight of the copolymer may be measured using a typical method known in the art. For example, the molecular weight measurements may be performed using: a quantitative end-group analysis method for obtaining a molecular weight by a quantitative analysis of functional groups at the ends of molecular chains; a colligative utilization method utilizing physical properties such as osmotic pressure, vapor pressure lowering, boiling point elevation, freezing point depression (membrane osmotic method, vapor pressure osmotic pressure method, etc.), a light scattering method using light scattering, an ultracentrifugation method in which the molecular weight is measured by centrifuging a polymer solution and then analyzing a sedimentation rate or concentration distribution, a viscosity method using the viscosity of a polymer solution, a gel permeation chromatography (GPC) using high performance liquid chromatography (HPLC), and the like.

As shown in FIG. 3, the electrode assembly may include a plurality of electrodes 110 and 120 and one separator 130, and the separator may be bent in a zigzag shape to be interposed between the electrodes. Accordingly, the electrode assembly may be in the form in which the electrodes 110 and 120 and the separator 130 are alternately stacked. Specifically, the electrode assembly may be formed by stacking one or more, specifically, two or more basic units U including the separator 130, the positive electrode 110, the separator 130, and the negative electrode 120. In this case, the application trace 140 of an adhesive is formed by applying and removing the adhesive, and may be present between surfaces in which the electrodes 110 and 120 and the separator 130 are in contact to remain on the surface of at least one of the electrodes 110 and 120 and the separator 130. As for the electrode assembly including the separator bent in a zigzag shape, in the manufacturing process, bending or folding of the separator causes the separator and/or the electrode to slip, which leads to poor quality and reduced process efficiency, but according to the present disclosure, as the adhesive is applied for bonding the electrode and the separator, the above-described slipping of the electrode and/or the separator may be prevented to a significant level, and a secondary battery having improved quality may be manufactured.

Hereinafter, examples of the present disclosure will be described in detail in such a manner that it may easily be performed by a person with ordinary skill in the art to which the present disclosure pertains. The present disclosure may, however, be embodied in many different forms, and is not limited to Examples set forth herein.

### Examples and Comparative Examples

### Example 1

### 1. Manufacture of separator

Al₂O₃ (average particle diameter (D₅₀) : 0.5 µm) as inorganic particles and an acryl-based binder were added to water as a solvent in a weight ratio of 96:4 to prepare a composition for forming a ceramic coating layer. As the acryl-based binder, a mixture of TRD 202A (from JSR) and AP-0821 (from APEC) was used. The composition for forming a ceramic coating layer was applied onto both sides of a polyethylene porous substrate (thickness: 9 µm, average pore diameter: 0.05 um, porosity: 45 volume%) through gravure coating and dried to form a ceramic coating layer (thickness of one layer: 1.5 um), thereby manufacturing a separator (thickness: 12 µm = 1.5 um + 9 um + 1.5 µm).

### 2. Manufacture of electrode assembly

An adhesive was applied onto the separator in a pattern in the form of a plurality of dots spaced apart, and a positive electrode was bonded thereto. The applied area (5.8875 mm²) of the adhesive was 0.002366% with respect to an area (24,889 mm²) of a surface in which the separator and the positive electrode were in contact. The adhesive was an acrylate-based adhesive, which is a copolymer including repeating units derived from methyl methacrylate (MMA), 2-ethylhexylacrylate (2-EHA), and 2-hydroxyethyl acrylate (2-HEA) in a weight ratio of 40:30:30. The positive electrode was bonded, and one side of the separator was folded to cover the positive electrode. The adhesive was applied in a pattern in the form of a plurality of dots spaced apart on a surface opposite to the surface covering the positive electrode of the separator, and a negative electrode was bonded thereto. The above process was repeated, so that an electrode assembly in which the separator is folded in a zigzag shape and 18 basic units having the separator/positive electrode/separator/negative electrode sequentially stacked therein are stacked was manufactured.

In this case, the positive electrode, in which Li[Ni_{0.8}Co_{0.1}Mn_{0.1}]O₂ as a positive electrode active material, PVdF as a binder, and carbon black as a conductive material were added to N-methylpyrrolidone (NMP) as a solvent in a weight ratio of 97.5:1.5:1.0 to prepare a positive electrode slurry, and as a positive electrode current collector, the positive electrode slurry was applied to both sides of an aluminum collector, dried, and roll pressed to form a positive electrode active material layer, was used.

In addition, the negative electrode, in which a mixture of SiO (average particle diameter (D₅₀) : 5 um) as a silicon-based active material and artificial graphite (average particle diameter (D₅₀): 20 µm) in a weight ratio of 10:90 as a negative electrode active material, styrene-butadiene rubber as a binder, carbon black as a conductive material, and carboxymethylcellulose (CMC) as a thickener were added to water as a solvent in a weight ratio of 95.5:2.5:1.0:1.0 to prepare a negative electrode slurry, and as a negative electrode current collector, the negative electrode slurry was applied to both sides of a copper collector, dried, and roll pressed to form a negative electrode active material layer, was used.

### 3. Preparation of gel polymer electrolyte composition

Polycarbonate (weight average molecular weight Mw: 20,000) as an oligomer, LiPF₆ as a lithium salt, and azobisisobutyronitrile (AIBN) as a polymerization initiator were mixed in a solvent to prepare a gel polymer electrolyte composition.

The solvent was a mixture of ethyl carbonate (EC) and ethyl methyl carbonate (EMC) at a volume ratio of 3:7, the gel polymer electrolyte composition included the lithium salt in a concentration of 1.0 M, the gel polymer electrolyte composition included the oligomer in an amount of 5 wt%, and the gel polymer electrolyte composition included the polymerization initiator in an amount of 0.6 parts by weight with respect to 100 parts by weight of the oligomer.

### 4. Manufacture of secondary battery

As a battery case, a pouch-type battery case made of aluminum was prepared, and an electrode assembly was accommodated in an accommodation space of the battery case.

Thereafter, the gel polymer electrolyte composition was injected into the battery case in which the electrode assembly was accommodated. After the injection of the gel polymer electrolyte composition, vacuum sealing was performed.

With the injection of the gel polymer electrolyte composition, an adhesive present in the electrode assembly was dissolved and removed through a solvent of the gel polymer electrolyte composition. As will be described later, the adhesive was removed to leave an application trace of the adhesive on the separator and the electrode.

Thereafter, the gel polymer electrolyte composition injected into the battery case was cured. The curing was performed through heat treatment at 60 °C for 5 hours.

Then, the battery case was cooled, sealed, and degassed to manufacture a secondary battery. The secondary battery had a thickness of 0.8 cm.

### Comparative Example 1

### 1. Manufacture of separator

Al₂O₃ (average particle diameter (D₅₀): 0.5 µm) as inorganic particles and PVdF as a binder were added to acetone as a solvent in a weight ratio of 70:30 to prepare a composition for forming a ceramic coating layer. The composition for forming a ceramic coating layer was applied onto both sides of a polyethylene porous substrate (thickness: 9 µm, average pore diameter: 0.05 um, porosity: volume%) through gravure coating and dried to form a ceramic coating layer (thickness of one layer: 3 pm), thereby manufacturing a separator (thickness: 15 µm = 3 um + 9 um + 3 µm).

### 2. Manufacture of electrode assembly

A plurality of separators manufactured above were prepared, and a plurality of the same ones as the positive electrode and the negative electrode used in Example 1 were prepared. Thereafter, an electrode assembly in which 18 basic units having separator/positive electrode/separator/negative electrode sequentially stacked therein were stacked was manufactured. Unlike Example 1, no adhesive was used in the electrode assembly.

### 3. Preparation of liquid electrolyte composition

A mixture of ethylene carbonate (EC) and ethyl methyl carbonate (EMC) in a volume ratio of 30:70 as a solvent was used and lithium salt LiPF₆ was added to the solvent in a concentration of 1.0 M to prepare a liquid electrolyte composition.

### 4. Manufacture of secondary battery

As a battery case, a pouch-type battery case made of aluminum was prepared, and the electrode assembly manufacture above was accommodated in an accommodation space of the battery case.

Thereafter, the liquid electrolyte composition prepared above was injected and vacuum sealed.

The battery case was cooled, sealed, and degassed to manufacture a secondary battery.

The secondary battery had a thickness of 0.8 cm.

### Comparative Example 2

### 1. Manufacture of separator

The same as the separator manufactured in Comparative Example 1 was used.

### 2. Manufacture of electrode assembly

The same as the electrode assembly manufactured in Comparative Example 1 was used.

### 3. Preparation of gel polymer electrolyte composition

The same as the gel polymer electrolyte composition prepared in Example 1 was used.

### 4. Manufacture of secondary battery

A secondary battery was manufactured in the same manner as in Example 1, except that the separator and the electrode assembly manufactured above were used.

### Comparative Example 3

### 1. Manufacture of separator

The same as the separator manufactured in Example 1 was used.

### 2. Manufacture of electrode assembly

The same as the electrode assembly manufactured in Example 1 was used.

### 3. Preparation of liquid electrolyte composition

The same as the liquid polymer electrolyte composition prepared in Comparative Example 1 was used.

### 4. Manufacture of secondary battery

A secondary battery was prepared in the same manner as in Comparative Example 1, except that the separator and the electrode assembly manufactured above were used.

The secondary battery had a thickness of 0.8 cm.

### Experimental Example

### 1. Observation of an application trace of an adhesive on a surface of a separator

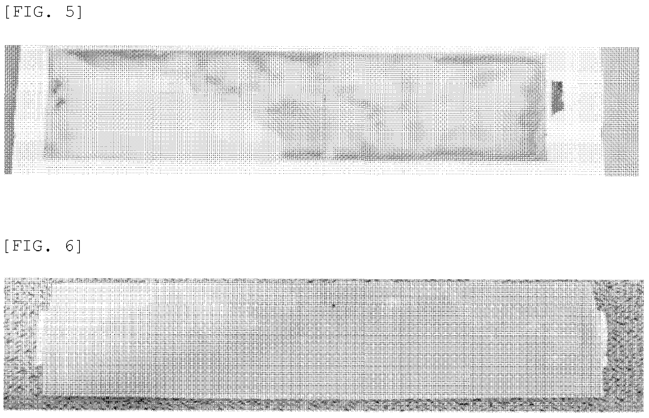

In the secondary batteries of Example 1 and Comparative Example 1, a separator corresponding to a surface in which the electrode and the separator are in contact was cut, and the surface was observed. A surface image of the separator separated from the secondary battery of Example 1 is shown in FIG. 5, and a surface image of the separator separated from the secondary battery of Comparative Example 1 is shown in FIG. 6.

As seen in FIG. 5, an application trace of the adhesive was observed in the surface image of the separator of Example 1.

Meanwhile, as seen in FIG. 6, the adhesive was not used in the manufacture of the electrode assembly of Comparative Example 1, and thus no application trace of the adhesive was observed in the surface image of the separator of Comparative Example 1.

### 2. Evaluation of thickness increase rate

The thickness increase rate of a secondary battery when the secondary batteries of Example 1 and Comparative Examples 1 to 3 were fully charged under the conditions of CC/CV mode, 0.33 C, 4.2 V, and 1/20 C cut-off was calculated through Equation below.

Thickness increase rate (%) = (thickness of secondary battery after full charge - thickness of secondary battery before charging) / (thickness of secondary battery before charging) × 100

The results are presented in Table 1 below.

### 3. Evaluation of lifespan performance

The secondary batteries of Example 1 and Comparative Examples 1 to 3 manufactured above were charged and discharged for 100 cycles at 45 °C under the following conditions, and capacity retention at the 100th cycle was evaluated.

### <Conditions of charging and discharging>

Charging: CC/CV mode, 0.33 C, 4.2 V, 1/20 C cut-off
Discharging: CC mode, 0.33 C, 2.5 V cut-off

A value obtained by dividing the discharge capacity at the 100th cycle by the discharge capacity at the first cycle under the above experimental conditions was defined as the capacity retention. The results are presented in Table 1 below.

### 4. Measurement of cell rigidity

In accordance with a method of 3-point bending, a force was applied downward to the center of each secondary battery at a rate of 10 mm/min to measure a stress value when a displacement of 2 mm was given. In this case, 30 gf was applied as a pre-load, the experiment was performed at room temperature, and the stress value was measured using a universal testing machine (UTM). The results are presented in Table 1 below.

### 5. Experiment of nail penetration

A metal nail having a diameter of 3.0 mm was dropped at a rate of 800 mm/min on the lithium secondary batteries manufactured in Example 1 and Comparative Examples 1 to 3, which were fully charged, and then a thermos-couple was attached to the surface of the secondary batteries to evaluate ignition.

The experiment was performed a total of three times, and it was evaluated as a pass when no ignition took place. The results are presented in Table 1 below.

**[Table 1]**

| | Experimenta l Example 2 | Experimenta l Example 3 | Experimenta l Example 4 | Experimenta l Example 5 |
|---|---|---|---|---|
| | Thickness increase rate (%) | Capacity retention at 100th cycle (%) | Cell rigidity | Evaluation of nail penetration (Pass/Total ) |
| Example 1 | 3.48 | 96.9 | 4.53 | 3/3 |
| Comparative Example 1 | 4.15 | 95.2 | 3.92 | 1/3 |
| Comparative Example 2 | 3.29 | 91.5 | 6.99 | 3/3 |
| Comparative Example 3 | 4.37 | 96.8 | 3.21 | 0/3 |

Referring to Table 1, it is seen that the secondary battery of Example 1 according to the present disclosure exhibits excellent levels of thickness expansion control, lifespan improvement, cell rigidity increase, and safety improvement together.

Meanwhile, in Comparative Example 1, it is seen that the thickness expansion of a silicon-based active material is not easily controlled, and cell rigidity and safety are degraded.

In addition, Comparative Example 2 has excellent cell rigidity, but resistance is hardly reduced due to the use of a gel polymer electrolyte and a separator in which a large amount of binder is used together, and accordingly, lifespan performance is greatly degraded.

In addition, in Comparative Example 3, it is seen that the thickness expansion of a silicon-based active material is hardly controlled, the cell rigidity is greatly reduced, and in particular, safety is quite poor as all were ignited in the nail penetration experiment.

### DESCRIPTION OF SYMBOLS

10: Secondary battery
100: Electrode assembly
U: Basic unit
110: Positive electrode
120: Negative electrode
130: Separator
131: Porous substrate
132a, 132b: Ceramic coating layer
140: Application trace of adhesive
200: Gel polymer electrolyte
300: Battery case
310: Cover
400: Positive electrode tab
500: Negative electrode tab

## Claims

1. A secondary battery, comprising:
an electrode assembly comprising an electrode and a separator which are alternately stacked;
a gel polymer electrolyte; and
a battery case accommodating the electrode assembly and the gel polymer electrolyte,
wherein the separator comprises a porous substrate and a ceramic coating layer disposed on both sides of the porous substrate,
wherein the ceramic coating layer comprises inorganic particles in an amount of 92 wt% or greater and less than 100 wt% and a binder in an amount of greater than 0 wt% and 8 wt% or less,
wherein the electrode comprises a positive electrode and a negative electrode, and
wherein the negative electrode comprises a silicon-based active material.

2. The secondary battery of claim 1, wherein the silicon-based active material comprises a compound represented by Formula 1:
[Formula 1] SiOₓ (0≤x<2).

3. The secondary battery of claim 1, wherein the negative electrode further comprises a carbon-based active material.

4. The secondary battery of claim 3, wherein the carbon-based active material comprises at least one type selected from the group consisting of artificial graphite, natural graphite, hard carbon, soft carbon, carbon black, graphene, and fibrous carbon.

5. The secondary battery of claim 3, wherein the negative electrode comprises the silicon-based active material and the carbon-based active material in a weight ratio of 1:99 to 15:85.

6. The secondary battery of claim 1, wherein the ceramic coating layer comprises inorganic particles in an amount of 93 wt% to 98 wt% and a binder in an amount of 2 wt% to 7 wt%.

7. The secondary battery of claim 1, wherein the binder comprises an acryl-based binder.

8. The secondary battery of claim 7, wherein the acryl-based binder comprises at least one type selected from the group consisting of a copolymer of ethylhexyl acrylate and methyl methacrylate, polymethyl methacrylate, polyethylhexyl acrylate, polybutyl acrylate, polyacrylonitrile, and a copolymer of butyl acrylate and methyl methacrylate.

9. The secondary battery of claim 1, wherein the ceramic coating layer has a thickness of 0.1 um to 10 µm.

10. The secondary battery of claim 1, wherein the separator has a thickness of 1 um to 20 µm.

11. The secondary battery of claim 1, wherein the gel polymer electrolyte is a cured product of a gel polymer electrolyte composition comprising a lithium salt, a polymerization initiator, and an oligomer compound.

12. The secondary battery of claim 11, wherein the gel polymer electrolyte composition comprises the oligomer compound in an amount of 1 wt% to 20 wt%.

13. The secondary battery of claim 11, wherein the oligomer compound comprises at least one type selected from the group consisting of a fluorine-based oligomer, a polycarbonate-based oligomer, and a polysiloxane-based oligomer.

14. The secondary battery of claim 1, wherein an adhesive is applied onto a surface of at least one of the electrode and the separator to bond the electrode and the separator to manufacture the electrode assembly, and
as the gel polymer electrolyte and the electrode assembly are accommodated in the battery case, the adhesive is removed to leave an application trace of the adhesive on a surface of at least one of the electrode and the separator.

15. The secondary battery of claim 14, wherein the adhesive is applied onto the surface of at least one of the electrode and the separator in a form of a plurality of patterns spaced apart.

16. The secondary battery of claim 14, wherein an application area of the adhesive is greater than 0% and 1% or less with respect to an area of a surface in which the separator and the electrode are in contact.
